# EUROPEAN PATENT SPECIFICATION

(11) **EP 1 676 687 B1**
(45) Date of publication and mention of the grant of the patent: **22.07.2009**
(21) Application number: 04792672.0
(22) Date of filing: 20.10.2004
(51) Int. Cl.: B29C 43/20, B29C 49/02, B29C 49/22, B29B 11/12, B29B 11/10

(54) **MULTILAYERED MOLTEN RESIN MASS, MULTILAYERED PREFORM FOR BLOW MOLDING FORMED FROM THE MULTILAYERED MOLTEN RESIN MASS BY COMPRESSION MOLDING, AND MULTILAYERED CONTAINER**
MEHRLAGIGE HARZSCHMELZENMASSE, AUS DER MEHRLAGIGEN HARZSCHMELZENMASSE DURCH FORMPRESSEN GEFORMTER MEHRSCHICHTIGER VORFORMLING ZUM BLASFORMEN UND MEHRLAGIGER BEHÄLTER
MASSE DE RESINE FONDUE MULTICOUCHE, PREFORME MULTICOUCHE POUR MOULAGE PAR SOUFFLAGE FORMEE A PARTIR DE CETTE MASSE DE RESINE FONDUE MULTICOUCHE PAR MOULAGE PAR COMPRESSION, ET RECIPIENT MULTICOUCHE

(30) Priority: 22.10.2003 JP 2003361584
(43) Date of publication of application: 05.07.2006
(73) Proprietor: Toyo Seikan Kaisha, Ltd., Tokyo 100-8522 (JP)
(72) Inventor: WATANABE, K., c/o Corp. Res.&Dev. Toyo Seikan Gp., Yokohama-shi, Kanagawa 240-0062 (JP); ETOH, M., c/o Corp. Res. & Dev. Toyo Seikan Gp., Yokohama-shi, Kanagawa 240-0062 (JP); FUKABORI, H., c/o Corp. Res.&Dev. Toyo Seikan Gp., Yokohama-shi, Kanagawa 240-0062 (JP); HIROTA, N., c/o Corp. Res. & Dev. Toyo Seikan Gp., Yokohama-shi, Kanagawa 240-0062 (JP); SHIBATA, S., c/o Corp. Res. & Dev. Toyo Seikan Gp., Yokohama-shi, Kanagawa 240-0062 (JP); IMATANI, T., c/o Toyo Seikan Kaisha, Ltd., Yokohama-shi, Kanagawa 230-0047 (JP)
(74) Representative: von Kreisler Selting Werner
(86) International application number: PCT/JP2004/015506
(87) International publication number: WO 2005/039855

(56) References cited:
- JP-A- 3 234 604
- JP-A- 2003 033 964
- PATENT ABSTRACTS OF JAPAN vol. 014, no. 373 (M-1009), 13 August 1990 (1990-08-13) & JP 02 134222 A (HIROSHI UENO), 23 May 1990 (1990-05-23)
- PATENT ABSTRACTS OF JAPAN vol. 016, no. 016 (M-1200), 16 January 1992 (1992-01-16) & JP 03 234604 A (YASUNAGA KUWABARA), 18 October 1991 (1991-10-18)
- PATENT ABSTRACTS OF JAPAN vol. 2000, no. 14, 5 March 2001 (2001-03-05) & JP 2000 326393 A (SHOWA DENKO KK), 28 November 2000 (2000-11-28)
- PATENT ABSTRACTS OF JAPAN vol. 2003, no. 06, 3 June 2003 (2003-06-03) & JP 2003 033964 A (TOYO SEIKAN KAISHA LTD), 4 February 2003 (2003-02-04)

## Description

### BACKGROUND OF THE INVENTION

### 1. Field of the Invention

The present invention relates to a multilayered molten resin mass, to a multilayered preform compression molded from the multilayered molten resin mass for blow molding, and to a multilayered container.

### 2. Description of the Related Art

Multilayered stretch-blow molded synthetic resin bottles and other multilayered synthetic resin containers are already in wide use, and functions not achievable with single-layer resin containers can be obtained with multilayered containers such as those having internal resin layers with excellent gas barrier or other properties and those which can include recycled resin layers (see the patent document 1). The intermediate resin layer of such containers which is composed of a gas barrier resin, recycled resin or the like needs to be embedded within the inner and outer resin layers without being exposed on the inner or outer surface of the container. To fulfill this requirement, the inventors have proposed that a multilayered molten resin mass in which the intermediate resin layer (gas barrier resin) is embedded eccentrically towards the bottom within an inner/outer layer resin be manufactured by extrusion molding, and that this multilayered molten resin mass then be supplied to a cavity mold and be compressed with a core mold to manufacture a multilayered preform as a multilayered molded material for blow molding (the patent document 2).Because in a multilayered molten resin mass manufactured by the aforementioned method the interlayer resin is included with deviation towards the bottom in the multilayered molten resin mass, when it is compressed with the core mold only the inner and outer layers are present in the upper part of the multilayered molten resin mass which first engages with the core mold, and the pressure of the core mold causes the inner/outer layer resin to flow up and down along the cavity mold. Finally the part comprising the interlayer resin is compressed by the core mold, forming a preform with no gate portion in which the mouth and neck are formed only of the inner/outer layer resin while in the body and base the interlayer resin is embedded between the inner and outer layers.

Ideally the inner and outer layers and the intermediate resin layer are uniform in thickness around the entire circumference of a preform obtained in this way, but in rare cases it has been observed that parts of the intermediate resin layer are too thin, broken, or too thick, or that parts of the intermediate resin layer are exposed on the outermost or innermost surfaces. As a result, if for example some parts of the intermediate resin layer are too thin or are broken the intermediate resin layer may not adequately fulfill its intended function because the desired gas barrier properties are not obtained for example. If the intermediate resin layer is exposed on the innermost or outermost surface, there is a risk that the intermediate resin layer may come into direct contact with the contents and adversely affect them, or that the intermediate resin layer may absorb water from the contents, detracting from its barrier properties. To resolve such problems, the layers of the multilayered preform must have a uniform circumferential distribution with the intermediate resin layer positioned entirely within the inner and outer resin layers, but no method has yet been established for obtaining such a layer distribution in a conventional perform.
Patent document 1: Japanese Patent Application Laid-open No. 2003-39531
Patent document 2: Japanese Patent Application Laid-open No. 2003-33964

In JP 2 134 222 (published 23-05-90), a pushing member (102) of an elevator mechanism (96) is raised from the lowest position, whereby a transferring means (60) is raised. At this time, a molten synthetic resin (26) in a multilayered structure is gradually extruded out from a discharge port (22) of an extruder (2). The axis of the transferring means (60) which is positioned at a receiving position (88) below the discharge port (22) of the extruder 2 extends substantially vertical to agree with the axis of the discharge port (22). Therefore, the axis of the transferring means (60) agrees with that of extrusion of the molten synthetic resin (26) extruded out of the discharge port (22). Accordingly, the molten synthetic resin (26) can be extruded without being deviated in any specific direction to the transferring means (60) in the closed state, and thus supplied to the transferring means (60). JP 02 134222 A discloses a molten resin mass according to the preamble of claim 1.

### SUMMARY OF THE INVENTION

It is an object of the present invention to provide, in a manufacturing method for obtaining a multilayered compression-molded product by compression molding of a multilayered molten resin mass, a multilayered compression-molded product wherein the layers of the multilayered compression-molded product have a uniform circumferential distribution with the intermediate resin layer positioned entirely within the inner and outer resin layers, and more specifically to provide a multilayered molten resin mass from which such a multilayered compression-molded product can be obtained.

To solve the aforementioned problems, the inventors discovered as a result of extensive research that the layer distribution of a multilayered preform for blow molding obtained by compression molding of a resin mass is affected by the shape of the interlayer resin in the multilayered molten resin mass, and arrived at the present invention after further research when they discovered the optimal shape of the interlayer resin for obtaining the aforementioned layer distribution.

That is, the multilayered molten resin mass of the present invention is a multilayered molten resin mass for obtaining a multilayered compression-molded product by means of compression molding, wherein an interlayer resin which makes up the intermediate resin layer of the multilayered molten resin mass is embedded within the inner/outer layer resin making up the inner and outer layers, wherein the aforementioned interlayer resin is concave in shape and is embedded eccentrically towards the bottom within the inner/outer layer resin, wherein the distance from the lower end of the aforementioned interlayer resin to the lower end of the multilayered molten resin mass is 10% or less of the entire length of the multilayered molten resin mass, and wherein the aforementioned interlayer resin is shaped such that y (length of umbrella part of interlayer resin) ≥ L (length of central part of interlayer resin) and 1 > dₒ (maximum outer diameter of interlayer resin in direction of circumference)/D (outer diameter of multilayered molten resin mass in direction of circumference) ≥ 0.5.

A multilayered molded product and multilayered preform for blow molding with approximately uniform circumferential layer distributions can be obtained by compression molding a multilayered molten resin mass with such a form. Moreover, a high-quality multilayered bottle or other blow-molded multilayered container wherein the layers of the multilayered compression-molded product have an approximately uniform circumferential distribution with the intermediate resin layer positioned entirely within the inner and outer resin layers, with no exposure of the intermediate resin layer on the inner circumferential surface, can be obtained by biaxial stretch molding of this multilayered preform for blow molding.

The aforementioned terms "bottom" and "lower end" are based on a case in which a molten resin mass is inserted into a female mold (cavity mold), and are used as a matter of convenience but may not always signify the physical bottom and lower end since the convex portion may be at the top if the female mold is arranged above a male mold (core mold).

### EFFECT OF THE INVENTION

Thus, with the present invention it is possible to obtain a multilayered molten resin mass which can be molded into a multilayered molded product and multilayered preform for blow molding which have approximately uniform layer thickness distributions with the thickness of the innermost layer maintained. Consequently, a multilayered preform for blow molding obtained from a multilayered molten resin mass obtained in the present invention has an approximately uniform layer distribution in the direction of circumference, and a high-quality multilayered bottle or other blow-molded multilayered container in which the intermediate resin layer is entirely positioned within the inner and outer resin layers, with an approximately uniform circumferential distribution and no exposure of the intermediate resin layer on the inner circumferential surface, can be obtained by biaxial stretch molding of this multilayered preform for blow molding.

### BRIEF DESCRIPTION OF THE DRAWINGS

Figure 1 is a model diagram showing the concept of the multilayered molten resin mass of the present invention.
Figure 2 is a cross-sectional diagram showing one embodiment of an extrusion device for extrusion forming a multilayered molten resin mass.
Figure 3 is a cross-sectional diagram showing another embodiment of an extrusion device for extrusion forming a multilayered molten resin mass.
Figure 4(a) is a cross-section of a multilayered molten resin mass according to the example of the present invention, while Figure 4(b) is a cross-section of a multilayered molten resin mass according to the comparative example.
Figure 5 is a frontal cross-section of a preform for blow molding, showing dimensional positions below the neck.
Figure 6 is a graph showing circumferential variation in the thickness of the innermost layer in the example and comparative example.
Figure 7 is a graph showing circumferential variation in the thickness of the interlayer in the example and comparative example.
Figure 8 is a graph showing differences in the thickness of each layer at different axial height positions on the preform of the example.
Figure 9 is a graph showing differences in the thickness of each layer at different axial height positions on the preform of the comparative example.

### EXPLANATIONS OF LETTERS OR NUMERALS

1, 30, 34: multilayered molten resin mass
2: inner/outer layer resin
3, 31: interlayer resin
10, 20: extrusion device
11a-11c: extruder
13: die
14a, 21a: inner/outer layer resin passage
14b, 21b: interlayer resin passage
14c, 21c: interlayer cut-off resin passage
15, 22: extrusion passage
16b, 16c: intermittent pressurizing mechanism
23b, 23c: valve mechanism
33: multilayered molten resin mass

### DESCRIPTION OF THE PREFERRED EMBODIMENTS

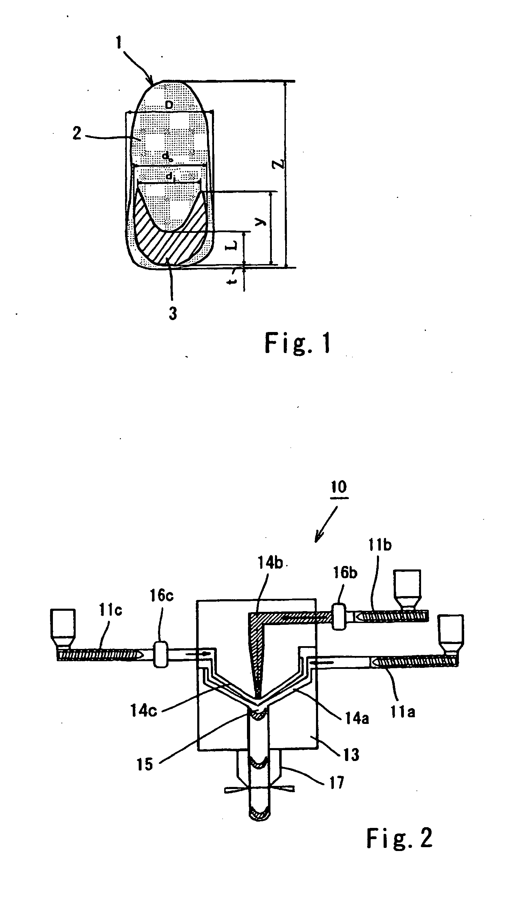

The present invention is explained in more detail below using the embodiment shown in Figures 1 and 2. Figure 1 is a model diagram showing the basic principles of the multilayered molten resin mass of the present invention. This multilayered molten resin mass 1 is composed of interlayer resin 3, which is composed for example of a resin with excellent gas barrier properties, embedded in inner/outer layer resin 2, and can be obtained for example using a molten resin extrusion supply device such as that described in the patent document 1. This multilayered molten resin mass exhibits an approximately cylindrical outline with the bottom part somewhat rounded and swollen on the outside, and with the interlayer resin embedded within the inner/outer layer resin towards the lower part. The position and shape of the interlayer resin in the inner/outer layer resin play an important role in controlling the layer distribution of the multilayered compressed preform as discussed below. In this embodiment, in order to control the layer distribution of the multilayered compressed preform so as to achieve a uniform circumferential distribution while maintaining the thickness of the innermost layer, interlayer resin 3 is positioned towards the bottom in the longitudinal direction of the multilayered molten resin mass, and has a concave form, with the central part depressed overall and the edges raised upward in an umbrella shape.

More specifically, the shape and position of the aforementioned interlayer resin 3 within inner/outer resin layer 2 have to fulfill the following conditions in Figure 1:
(A) the distance t from the lower end of interlayer resin 3 to the lower end of multilayered molten resin mass 1 is 10% or less of the total length Z of the multilayered molten resin mass, or in other words t/Z 5 ≤0.1, (B) length y of the umbrella part of the interlayer resin is greater than length L of the central part, or y ≥ L, (C) the maximum outer diameter dₒ of the intermediate resin layer in the direction of circumference is 50% or more of the outer diameter D of the multilayered molten resin mass in the direction of circumference, or 1 > dₒ/D ≥ 0.5, and (D) the maximum inner diameter dᵢ of the interlayer resin in the direction of circumference is 50% or more of the outer diameter D of the multilayered molten resin mass in the direction of circumference, or 1 > dᵢ/D ≥ 0.5.

A multilayered molded product and multilayered preform for blow molding having approximately uniform layer distributions of the body and base in the direction of circumference can be obtained by compression molding a multilayered molten resin mass with such a shape. Moreover, a high-quality multilayered bottle or other blow-molded multilayered container wherein the layers of the multilayered compression molded product have a uniform circumferential distribution with the intermediate resin layer positioned entirely within the inner and outer resin layers, with no exposure of the intermediate resin layer on the inner circumferential surface, can be obtained by biaxial stretch molding of this multilayered preform for blow molding. Of the aforementioned conditions, condition (D) is not absolutely required but is a desirable condition. Of the aforementioned conditions, if t/Z > 0.1 the interlayer will spread upwards and it will be difficult to ensure a uniform interlayer, while outside the range of 1 > dₒ/D ≥ 0.5 and 1 >dᵢ/D ≥ 0.5, the thickness of the interlayer will be unstable during compression molding, and a molded product with a uniform layer distribution will not be achieved.

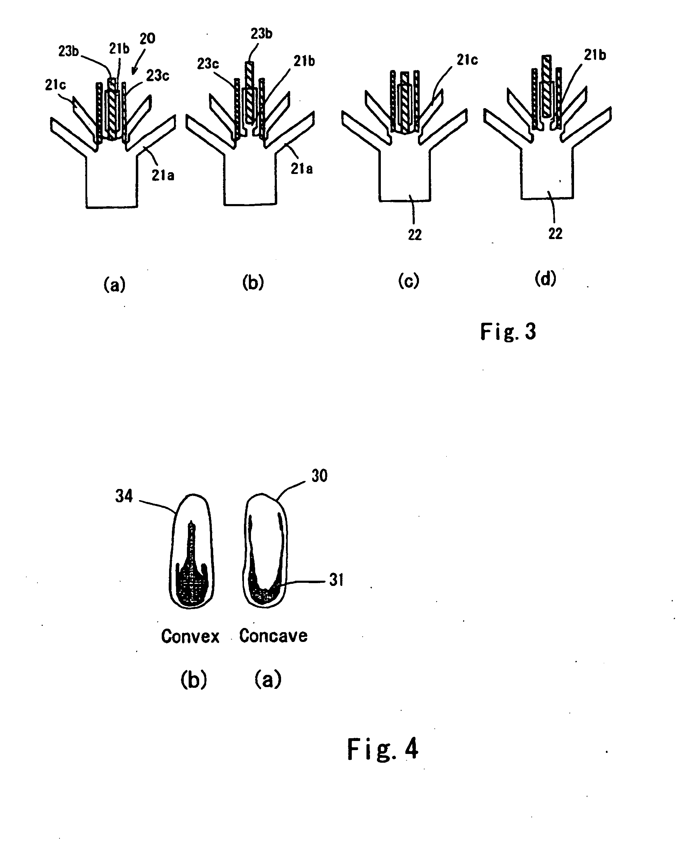

The aforementioned multilayered molten resin mass can be formed as follows using an extrusion device such as those shown in Figures 2 and 3 for example. The multilayered molten resin mass extrusion device 10 shown in Figure 2 is equipped with extruder 11a for melting and kneading the inner/outer layer resin, extruder 11b for melting and kneading the interlayer resin, and extruder 11c for melting and kneading the interlayer cut-off resin. Die 13, which connects these extruders, is provided with inner/outer layer resin passage 14a, interlayer resin passage 14b and interlayer cut-off resin passage 14c, and these resin passages 14a, 14b and 14c converge in extrusion passage 15. Intermittent pressurizing mechanisms 16b and 16c are provided between extruder 11b and interlayer resin passage 14b and between extruder 11c and interlayer cut-off resin passage 14c, respectively, so that the interlayer resin can be intermittently extruded and so that the interlayer cut-off resin can be extruded intermittently at the proper time to completely cut off the interlayer resin. In this case, if a resin of the same material as the inner/outer layer resin is adopted as the interlayer cut-off resin, a multilayered molten resin mass with the interlayer resin embedded within the inner/outer layer resin can be formed if a continuous molten resin is extruded from die lip 17 with the inner/outer resin layer covering the interlayer resin and the interlayer intermittently present, and the resin is cut off at a point at which the interlayer resin is not present.

Like the extrusion device shown in Figure 2, the multilayered molten resin mass extrusion device 20 shown in Figure 3 is equipped with an inner/outer layer resin extruder, and interlayer resin extruder and an interlayer cut-off resin extruder, while the die is provided with inner/outer layer resin passage 21a, interlayer resin passage 21b and interlayer cut-off resin passage 21c which connect to these extruders, which converge at extrusion passage 22. In extrusion device 20 of this embodiment, in place of the intermittent pressurization device of the embodiment shown in Figure 2, interlayer resin passage 21b and interlayer cut-off resin passage 21c are provided respectively with valve mechanisms 23b and 23c which open and close their outlets. These valve mechanisms 23b and 23c can be driven independently of one another, and combinations of open and closed valves are shown in Figures 3(a) through 3(d). The interlayer resin is extruded intermittently by intermittently opening the outlet of interlayer resin passage 21b by means of valve mechanism 23b, while valve 23c is operated at the appropriate time to intermittently extrude interlayer cut-off resin, forming a multilayered molten resin mass with the interlayer resin covered with the inner/outer resin layer and embedded within the inner/outer layer resin.

In the respective extrusion devices shown in Figures 2 and 3, the inner/outer layer resin and interlayer cut-off resin are formed of the same material, so that in the process of extruding the multilayered molten resin mass the shape of the interlayer resin in the multilayered molten resin mass can be controlled by adjusting the extrusion timing of the intermittently-extruded interlayer resin and interlayer cut-off resin. For example, if the interlayer resin and interlayer cut-off resin are ejected simultaneously the interlayer resin will be convex, while if they are ejected alternately the interlayer resin will be concave.

### EXAMPLES

### Example

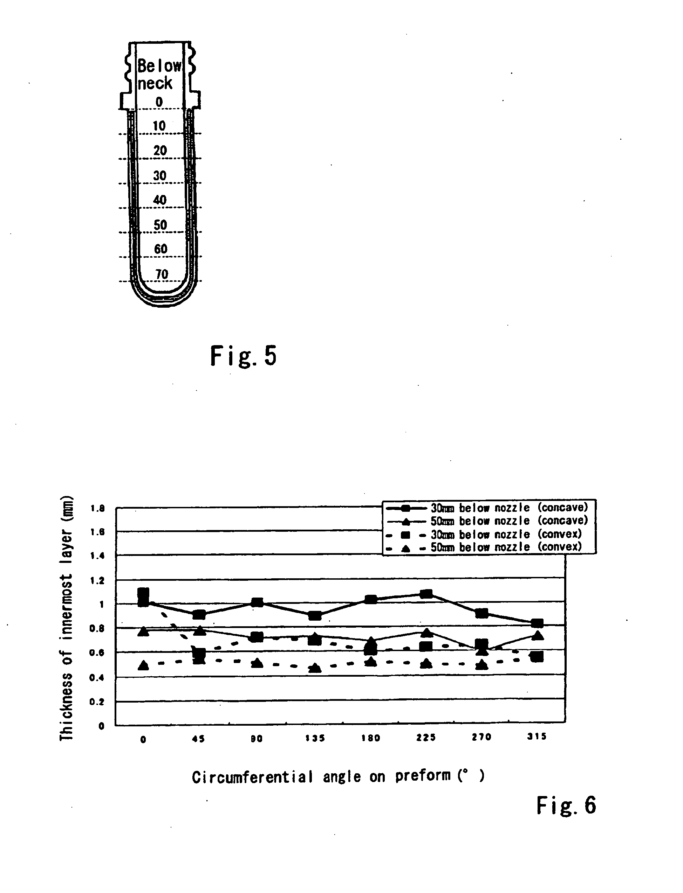

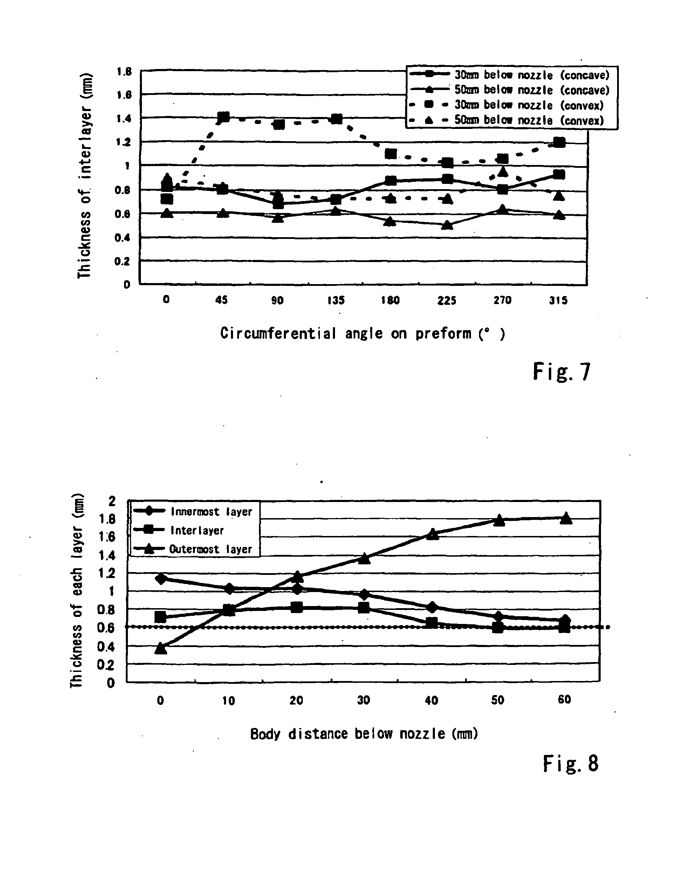

By the extrusion device shown in Figure 2, multilayered molten resin mass 30 having the dimensions given below and an interlayer resin 31 with a concave shape was obtained as shown in Figure 4(a) using the resins given below as the materials for each layer. The resulting multilayered molten resin mass was compression molded into a based preform for bottle molding, and as shown in Figure 5, cross-sections were cut at 10 mm intervals moving downwards in the axial direction from the neck of the preform, and the thicknesses of the innermost layer, middle layer and outermost layer were measured in the direction of circumference to investigate the layer distribution. The results are shown in Figures 6 through 8. Figure 6 shows the distribution of thickness of the innermost layer in the circumferential direction 30 mm and 50 mm below the neck, while Figure 7 shows the distribution of thickness of the interlayer in the circumferential direction 30 and 50 mm below the neck. Figure 8 shows differences in thickness of the innermost layer, interlayer and outermost layer at 10 mm intervals in the axial direction, with the layer thickness at each position given as a mean value for circumferential thickness at that vertical position.

### Materials of the multilayered molten resin mass

Inner/outer layer resin: polyethylene terephthalate (IV = 0.82)

Interlayer resin: recycled polyester resin (PCR) (Yono PET Recycling Co.)

Interlayer cut-off resin: polyethylene terephthalate (IV = 0.82)

### Dimensions of resin mass

Full length of multilayered molten resin mass (Z): 66 mm

Length of umbrella part of interlayer resin (y): 52 mm

Length of central part of interlayer resin (L): 9.4 mm

Distance from lower end to lower end of interlayer resin (t): 2.1 mm

Outer diameter of multilayered molten resin mass (D): 22.9 mm

Outer diameter of upper end of interlayer resin (do): 17.7 mm

### Comparative Example

Multilayered molten resin mass 34 with a convex interlayer resin as shown in Figure 4(b) was obtained using a similar resin composition and a similar extrusion device as in the example, and the thickness distributions of each layer were measured at the same positions as in the example. The results are shown in Figures 6, 7 and 9 together with those from the aforementioned example.

As a result, as shown in Figure 6, in the thickness distribution of the innermost layer a thickness of 0.8 mm or more 30 mm below the neck and 0.6 mm or more 50 mm below the neck was maintained in the example, with little variation in the circumferential direction. In contrast, in the comparative example an adequate thickness of the innermost layer was not maintained, with a thickness of no more than 0.55 mm 30 mm below the neck and no more than 0.45 mm 50 mm below the neck in some places, and moreover there was great circumferential variation. Similarly, as shown in Figure 7, looking at the interlayer there was little circumferential variation in the thickness of the interlayer either 30 mm or 50 mm below the neck in the example, with an approximately uniform thickness all around the circumference, while in the comparative example there was considerable circumferential variation in the interlayer thickness.

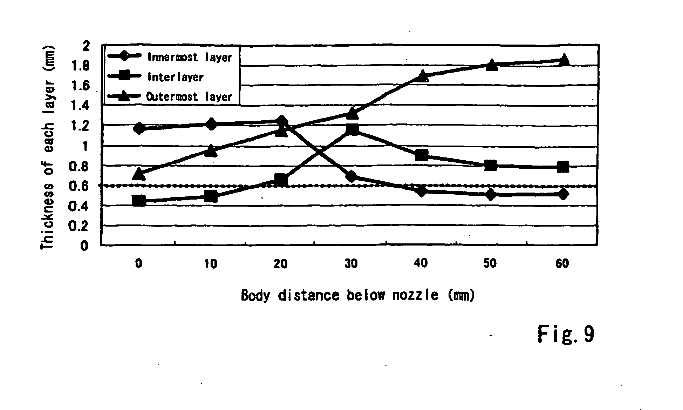

Although in the thickness distribution of the innermost, intermediate and outermost layers at intervals of 10 mm in the axial direction below the neck of the preform, there was some variation in thickness at each level in the example, there was little variation in the most important layers, the intermediate and innermost layers, and since both layers were maintained at a thickness of 0.6 mm or more there was little risk of the aforementioned problems occurring. In the comparative example, by contrast, there was considerable variation in the intermediate and innermost layers as shown in Figure 9, and the innermost layer in particular was 0.6 mm or less in thickness at the bottom part so an adequate thickness was not maintained. These examples confirm the effectiveness of this method because the multilayered molten resin mass of the present invention provides the necessary thickness and uniformity of thickness of the resulting multilayered molded product.

Consequently, since there is no risk that the interlayer of a bottle or other container blow molded from a preform obtained by compression molding of the multilayered molten resin mass of the present invention will be exposed on the inner surface of the container, there is no risk that the contents of the bottle will be adversely effected by contact with the interlayer, or that the interlayer will absorb water from the contents, detracting from its barrier properties.

### INDUSTRIAL APPLICABILITY

As described above, the multilayered molten resin mass of the present invention is useful in the molding of various multilayered resin molded products such as bottles and other multilayered resin containers, multilayered resin caps and the like because it can provide a multilayered preform for blow molding which has an approximately uniform layer distribution with the thickness of the interlayer maintained without exposure of the intermediate resin layer on the outside of the preform, and can also provide, by means of biaxial stretch molding of the multilayered preform for blow molding, a multilayered resin product wherein the intermediate resin layer is located within the inner and outer resin layers and has a uniform circumferential distribution.

## Claims

1. A multilayered molten resin mass for obtaining a multilayered compression-molded product by compression molding wherein interlayer resin (3) which makes up an intermediate resin layer of the multilayered molten resin mass is embedded within inner/outer layer resin (2) making up inner and outer layers, and wherein the interlayer resin (3) is concave in shape, wherein
the interlayer resin (3) is embedded eccentrically towards the bottom within the inner/outer layer resin (2),
**characterized in that** the distance from the lower end of the interlayer resin (3) to the lower end of the multilayered molten resin mass is 10% or less of the entire length of the multilayered molten resin mass, and **in that**
the interlayer resin (3) is shaped such that y (length of umbrella part of interlayer resin) ≥ L (length of central part of interlayer resin), and 1 > dₒ (maximum outer diameter of interlayer resin in direction of circumference)/D (outer diameter of multilayered molten resin mass in direction of circumference) ≥ 0.5.

## Patentansprüche

1. Mehrschichtige Harzschmelzenmasse zum Erhalten eines mehrschichtigen formgepressten Produkts durch Formpressen, wobei Zwischenschichtharz (3), welches eine Zwischenharzschicht der mehrschichtigen Harzschmelzenmasse bildet, in Innen-/Außenschichtharz (2) eingebettet ist, welches Innen- und Außenschichten bildet, und wobei das Zwischenschichtharz (3) von konkaver Form ist, wobei das Zwischenschichtharz (3) innerhalb des Innen-/Außenschichtharzes (2) exzentrisch in Richtung des Bodens eingebettet ist,
**dadurch gekennzeichnet, dass**
der Abstand von dem unteren Ende des Zwischenschichtharzes (3) zum unteren Ende der mehrschichtigen Harzschmelzenmasse 10% oder weniger der Gesamtlänge der mehrschichtigen Harzschmelzenmasse beträgt, und dass
das Zwischenschichtharz (3) derart geformt ist, dass y (Länge des Schirmteils des Zwischenschichtharzes) ≥ L (Länge des Mittelteils des Zwischenschichtharzes) und 1 > dₒ (maximaler Außendurchmesser des Zwischenschichtharzes in Umfangsrichtung)/D (Außendurchmesser der mehrschichtigen Harzschmelzenmasse in Umfangsrichtung) ≥ 0,5.

## Revendications

1. Masse de résine fondue multicouche pour obtenir un produit multicouche moulé à pression par moulage à pression, dans laquelle une résine inter-couches (3), qui forme une couche de résine intermédiaire de ladite masse de résine fondue multicouche, est incluse dans de la résine de couches interne/externe (2) formant des couches internes et externes, et ladite résine inter-couches (3) est de forme concave, et ladite résine inter-couches (3) est incluse entre la résine des couches interne/externe (2) en excentricité vers le fond,
**caractérisée en ce que**
la distance de l'extrémité basse de la résine inter-couche (3) à l'extrémité basse de la masse de résine fondue multicouche est 10% ou moins de la longueur totale de la masse de résine fondue multicouche, et **en ce que**
ladite résine inter-couches (3) est formée de manière que y (longueur de la partie en forme d'un parapluie de la résine inter-couche) ≥ L (longueur de la partie centrale de la résine inter-couche), et 1 > dₒ (diamètre extérieur maximal de la résine inter-couche dans la direction de circonférence) / D (diamètre extérieur de la masse de résine fondue multicouche dans la direction de circonférence) ≥ 0.5.
